# FASCICULE DE BREVET EUROPEEN

(11) **EP 4 210 483 B1**
(45) Date de publication et mention de la délivrance du brevet: **12.02.2025**
(21) Numéro de dépôt: 21769818.2
(22) Date de dépôt: 09.09.2021
(51) Int. Cl.: A01M 1/20, A01M 1/02, B64D 1/02, A01M 5/00

(54) **DISPOSITIF DE LARGAGE AÉRIEN D'ÉLÉMENTS SOUPLES À PROFIL FERMÉ**
VORRICHTUNG ZUM ABWERFEN EINES RINGFÖRMIGEN FLEXIBLEN ELEMENTS AUS DER LUFT
DEVICE FOR DROPPING FLEXIBLE ANNULAR ELEMENTS FROM THE AIR

(30) Priorité: 11.09.2020 FR 2009230
(43) Date de publication de la demande: 19.07.2023
(73) Titulaire: AGRI.BUILDERS SAS, 69003 Lyon (FR)
(72) Inventeur: DUCHEMIN, Antoine, 45160 Olivet (FR); TRUBERT, Alexis, 33470 Le Teich (FR); BOUDON, Antoine, 69003 Lyon (FR)
(86) Numéro de dépôt international: PCT/IB2021/058208
(87) Numéro de publication internationale: WO 2022/053972

(56) Documents cités:
- EP-A2- 0 816 430
- FR-A1- 3 071 481
- KR-A- 20170 099 337
- US-A1- 2002 194 771
- US-A1- 2017 210 451
- US-A1- 2020 047 353
- UNKNOWN: "Châtaignier: lutte biologique contre le carpocapse", 7 April 2016 (2016-04-07), France, pages 1 - 27, XP055490280, Retrieved from the Internet <URL:http://www.ctifl.fr/DocPdf/Agenda/Presentation/473/4LutteBioCarpoChataigne070416.pdf?20/07/2016%20131521> [retrieved on 20180704]

## Description

La présente invention concerne un dispositif combinant stockage et largage depuis les airs, par commande sans fil et à distance, d'éléments souples à profil fermé.

### Domaine technique

L'exploitation de vergers pour la production de fruits nécessite la régulation des populations d'insectes ravageurs. Une solution biologique permettant de d'empêcher la prolifération de ces populations est de saturer l'air ambiant de phéromones sexuelles associées à l'espèce de ravageur ciblée, limitant fortement la reproduction de ladite espèce. Cette technique de lutte contre les ravageurs est communément appelée confusion sexuelle. Les phéromones sont notamment commercialisées dans des contenants circulaires, sous forme d'anneaux fins et souples dans lesquels la substance chimique est imprégnée, qui doivent être disposés dans les parcelles. Afin de maximiser l'efficacité de cette technique dite de confusion sexuelle, les fabricants recommandent d'accrocher les contenants imprégnés de phéromones dans le tiers le plus haut des arbres fruitiers.

### Technique antérieure

Actuellement deux méthodes sont utilisées pour déposer dans les arbres fruitiers les anneaux de phéromones précédemment décrits. Les documents suivants y font référence :
- Inconnu : « Lutte par confusion sexuelle contre le carpocapse en verger de noyer », Mai 2016, pages 1-3, France. Extrait de l'Internet : http://senura.com/images/DOCUMENTS/DOCUMENTS_TECHNIQUES/Confus ion_sexuelle_verger_Noyer.pdf [extrait le 2020-04-29].
- Inconnu : « Châtaignier : lutte biologique contre le carpocapse », 7 Avril 2016, pages 14-25, France. Extrait de l'Internet : http://www.ctifl.fr/DocPdf/ Agenda/Presentation/ 473/4 LutteBioCarpoChataigne07 0416.pdf?20/07/2016%20131521 [extrait le 2020-04-29].

La première consiste à accrocher un anneau sur une perche pour le placer dans l'arbre, l'opérateur ayant les pieds sur le sol ou bien sur une plateforme en hauteur pour traiter les arbres de grande taille. Cette méthode induit un temps de pose global sur une parcelle très long, du fait des déplacements de l'opérateur et de l'éventuelle plateforme pour chaque arbre. De plus le tiers supérieur des arbres ne peut pas toujours être atteint en fonction de la taille de ces derniers. Enfin l'utilisation d'une nacelle comporte un risque pour l'opérateur, et celle-ci ne peut être utilisée sur les terrains en pente qui constituent une part non négligeable des surfaces de culture.

La seconde méthode consiste à utiliser une arbalète. L'anneau est alors accroché sur une flèche lestée et filoguidée, qui est tirée vers le haut de l'arbre à travers les branchages inférieurs. L'accrochage de l'anneau dans l'arbre est aléatoire, il est parfois nécessaire de s'y reprendre à plusieurs fois pour placer correctement un anneau. De plus l'arbalète doit être rechargée pour chaque tir, ce qui implique un temps de pose très important pour une parcelle entière.

Concernant le largage depuis les airs, il existe des dispositifs de sauvetage en mer permettant le largage d'équipement de survie depuis un drone, tel que décrit dans le brevet n°US2017210451(A1) - DRONE -TYPE LIFE SAVING EQUIPMENT DROPPING DEVICE. Ce type de système embarque un nombre réduit de kits par engin volant, inférieur à la dizaine, or pour disposer les anneaux de manière efficace dans une parcelle, dans le cadre d'une exploitation commerciale, il convient d'en embarquer un nombre conséquent (fonction de stockage) afin de réduire la fréquence de rechargement du dispositif. Par ailleurs, un dispositif dédié spécifiquement au largage de plusieurs anneaux a déjà été imaginé, visant à apporter une réponse à la problématique évoquée. Ce dispositif est décrit dans le brevet n°FR3071481A1 - DISPOSITIF DE LARGAGE D'ELEMENTS SOUPLES A PROFIL FERME, NOTAMMENT DES ANNEAUX CHARGES DE PRODUITS PHYTOSANITAIRES. Cependant ce dernier système ne se révèle pas très efficace en pratique, notamment dans la perspective d'une exploitation commerciale. En particulier le nombre d'anneaux emporté n'est pas très important, leur chargement sur le châssis est laborieux, leur maintien en tension n'est pas garanti et leur accrochage dans les arbres suite au largage est aléatoire.

### Résumé de l'invention

L'invention permet de remédier aux problèmes soulevés ci-dessus au moyen d'un dispositif tel que défini dans la revendication 1 et d'un procédé tel que défini dans la revendication 9. D'autres modes de réalisation avantageux sont décrits dans les revendications dépendantes. Ledit dispositif peut comporter un châssis de forme polygonale, contenu dans un plan horizontal parallèle au sol.

Le dispositif comporte des organes de largage, placés préférentiellement sur tous les sommets du châssis polygonal, et solidaires de ce châssis. Les deux fonctions de ces organes de largage sont le stockage des anneaux sur la périphérie du châssis, et le largage à l'unité des anneaux stockés. Parmi les organes de largage du dispositif, on trouvera au moins un organe dit « actif » (éventuellement plusieurs), et en complément éventuel un ou plusieurs organes dits « passifs » (non obligatoire).

Selon un mode de réalisation préféré, chaque organe de largage actif est muni d'une courroie fermée, dentée sur sa face extérieure, et motorisée. Sur la face extérieure de cette courroie, l'espace entre deux dents successives est légèrement supérieur à la hauteur d'un anneau, permettant l'empilement vertical des anneaux avec un unique anneau entre deux dents successives, chaque anneau étant contenu dans un plan horizontal parallèle au châssis. La rotation de la courroie pas-à-pas permet le largage à l'unité des anneaux disposés le long de cette courroie, un pas étant rigoureusement égal à la distance entre deux dents de la courroie. La rotation de la courroie est assurée par un moyen moteur faisant partie intégrante de l'organe de largage actif. Un organe de largage passif comporte une partie lisse et verticale, permettant d'une part le maintien en tension des anneaux stockés autour du châssis, et d'autre part le glissement progressif des anneaux vers le bas jusqu'au moment de leur chute, cette chute étant provoquée par la/les courroie(s) de l'/les organe(s) de largage actif(s).

Selon un mode de réalisation préféré, le dispositif comporte un module de pilotage à distance, permettant le déclenchement du largage d'un ou plusieurs anneaux par un opérateur depuis le sol, le dispositif étant destiné à être embarqué sous un engin volant.

Afin de faire correspondre précisément, pour des raisons de tension, le périmètre extérieur du châssis polygonal au périmètre intérieur des éléments à larguer, de type anneaux, le châssis pourra, selon un mode de réalisation préféré, comporter un ou plusieurs mécanismes de réglage de la distance entre les sommets du polygone. De plus, ces mécanismes de réglage pourront aussi permettre de plier le châssis, assurant une diminution de son périmètre par rapport à la dimension nominale, facilitant ainsi le chargement des anneaux autour du châssis. Enfin ce caractère pliable est avantageux pour réduire l'encombrement du dispositif lorsqu'il n'est pas utilisé.

Selon un mode de réalisation préféré, le dispositif comporte des organes de guidage, chaque organe de guidage étant accroché sous le châssis, suspendu verticalement sous celui-ci. La première fonction de ces organes de guidage est le maintien de l'ouverture d'un anneau lors de sa chute, celui-ci pouvant avoir tendance à se refermer. La seconde fonction est le guidage de l'anneau largué jusqu'à son point de chute souhaité. Un organe de guidage est constitué d'un fil souple, éventuellement lesté, pendant verticalement sous le châssis et auquel il est accroché.

Par ailleurs, le dispositif comporte un système de fixation adapté à l'engin volant utilisé. Ce système de fixation n'est pas unique et est amené à varier en fonction de l'engin volant utilisé.

Le procédé selon l'invention, en vue d'une exploitation commerciale du dispositif décrit ci-dessus pour le largage d'éléments souples à profil fermé, est décrit ci-après. Tout d'abord les éléments souples à profil fermé, de type anneaux, sont chargés sur le dispositif de largage en les empilant sur les organes de largage jusqu'à la capacité maximale, un unique élément souple étant préférentiellement positionné entre deux dents successives. On pourra s'aider pour cela du mécanisme permettant de plier le châssis. La tension des éléments souples est éventuellement ajustée grâce au mécanisme dédié. Par la suite le dispositif complet chargé de ses éléments souples est accroché sous l'engin volant. Ce dernier peut alors décoller, et se positionne successivement au cours de son vol au-dessus des différents emplacements de largage, déterminés au préalable. Au-dessus de chacun de ces emplacements, le largage d'un ou plusieurs éléments souples est déclenché. Lorsque tous les éléments souples à profil fermé initialement chargés sur le dispositif de largage ont été largués, l'engin volant se pose et le dispositif de largage vidé en est décroché.

Selon un mode de réalisation préféré, les emplacements de largage du procédé décrit ci-dessus pourront être déterminés automatiquement à l'aide d'un outil de reconnaissance d'image, sur la base de photographies aériennes du lieu.

Selon un mode de réalisation préféré, le vol de l'engin volant ainsi que le déclenchement de chaque largage pourront être effectués de manière automatique, sans l'intervention d'un quelconque pilote ou opérateur.

### Brève description des dessins

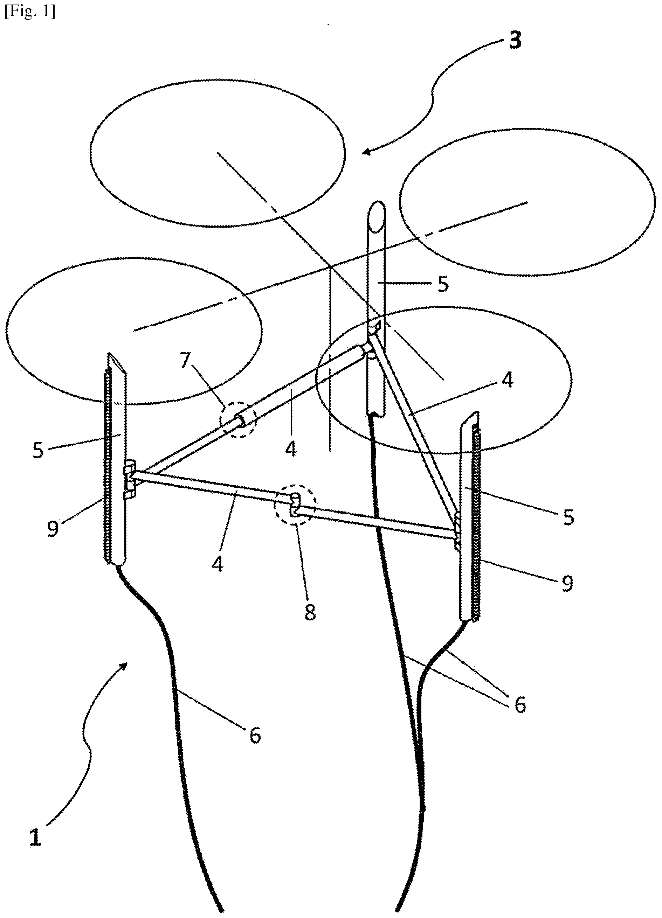

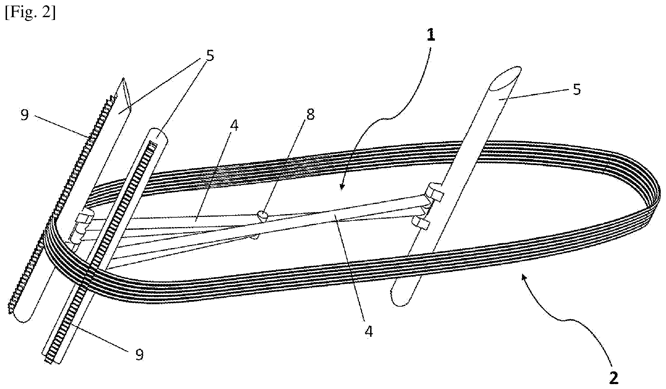

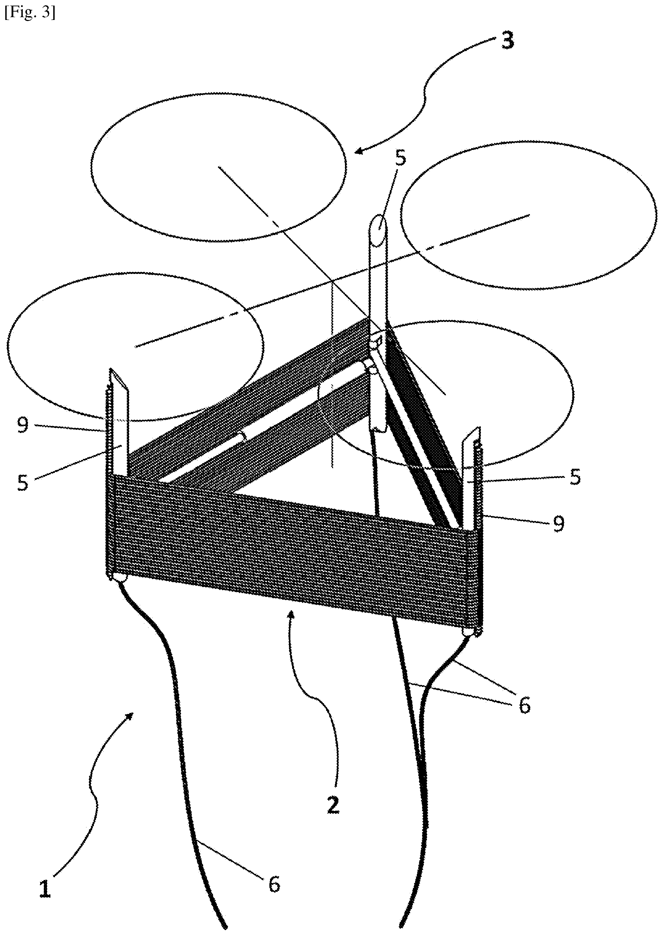

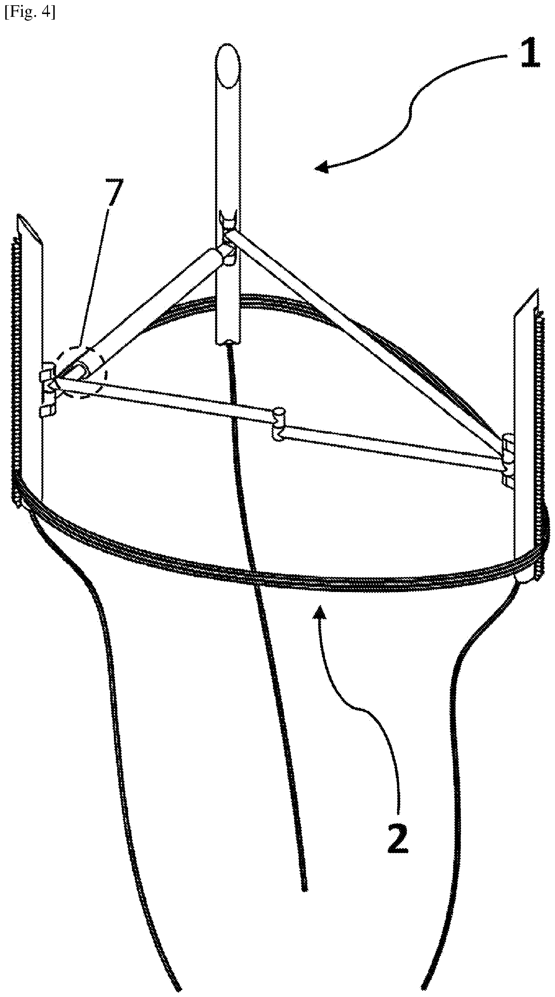

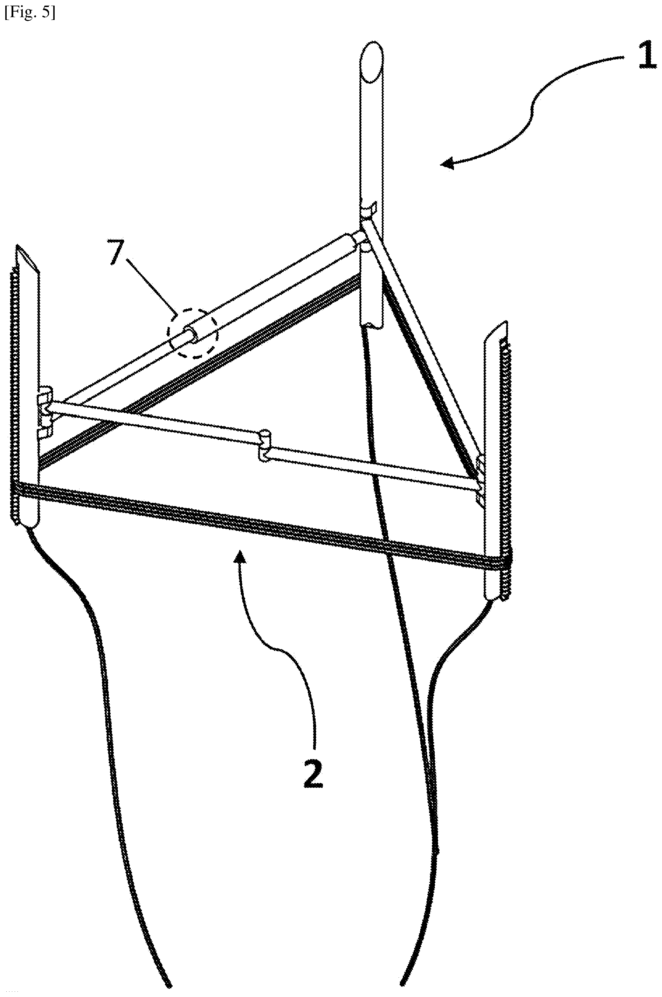

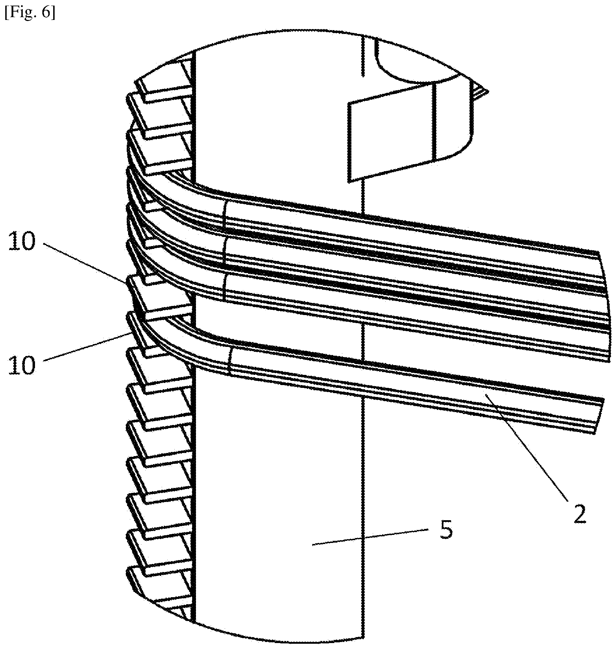

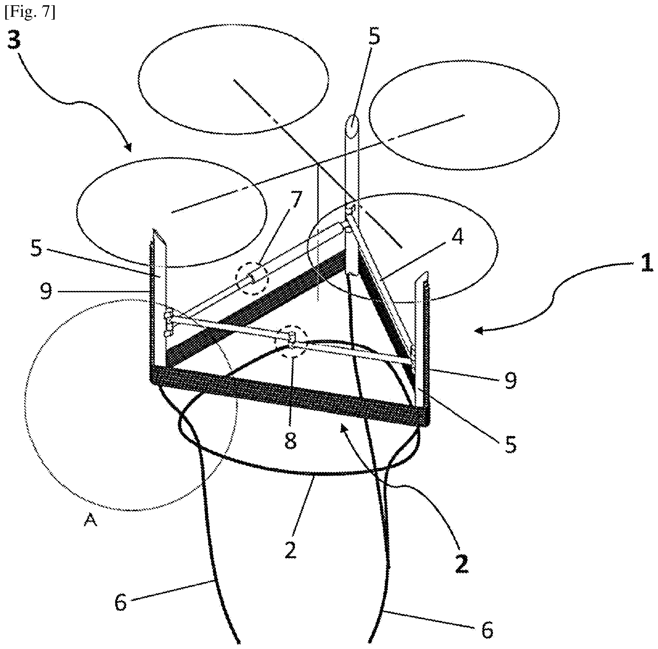

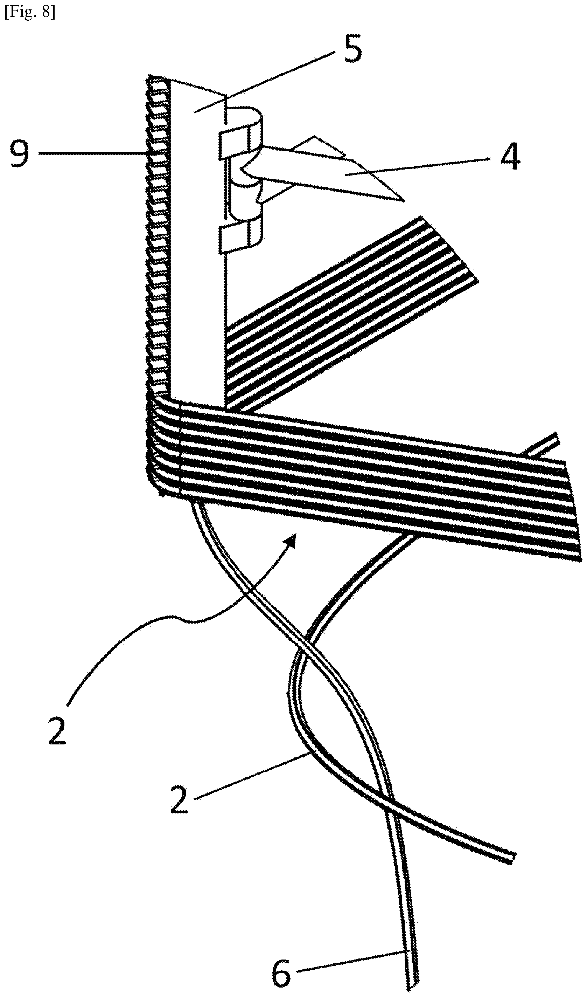

Les dessins annexés illustrent l'invention :
**Fig.1**
   La figure [Fig.1] présente une vue d'ensemble du dispositif, sans son chargement.
**Fig.2**
   La figure [Fig.2] présente le dispositif dans sa configuration pliée, particulièrement adaptée au chargement des anneaux sur le châssis.
**Fig.3**
   La figure [Fig.3] présente le dispositif dans sa configuration nominale, en partie chargé.
**Fig.4**
   La figure [Fig.4] présente le mécanisme de réglage de la tension des anneaux à larguer, dans la configuration « anneaux détendus ».
**Fig.5**
   La figure [Fig.5] présente le mécanisme de réglage de la tension des anneaux à larguer, dans la configuration « anneaux tendus ».
**Fig.6**
   La figure [Fig.6] illustre par un zoom le positionnement de quelques anneaux sur la courroie d'un organe de largage actif.
**Fig.7**
   La figure [Fig.7] illustre le processus de largage d'un anneau et la fonction des organes de guidage.
**Fig.8**
   La figure [Fig.8] est un grossissement de la zone circulaire A apparaissant sur la figure [Fig. 7].

### Description des modes de réalisation

En référence à ces dessins, et selon un mode particulier de réalisation, le dispositif (1) comporte un châssis triangulaire (4) constitué de barres tubulaires, liées entre elles par l'intermédiaire des trois organes de largage (5). Dans le mode de réalisation présenté, sans être le seul possible, les organes de largage (5) font partie intégrante du châssis (4), c'est-à-dire qu'ils assurent la rigidité de la structure en reliant les barres entre elles. Selon un mode particulier de réalisation, les barres tubulaires peuvent être choisies en aluminium, pour un bon compromis entre légèreté de la structure et coût de fabrication. Le périmètre du châssis (4) est dimensionné pour permettre la tenue des anneaux (2) autour de celui-ci, en les maintenant tout juste tendus. Un mécanisme de réglage de la tension, dont le fonctionnement est illustré sur les figures [Fig.4] et [Fig.5], peut être ajouté afin de s'adapter à plusieurs types d'anneaux (2), ayant des diamètres différents. Dans le mode de réalisation présenté, ce mécanisme est constitué d'une barre télescopique (7) qui permet d'ajuster le périmètre extérieur du dispositif et donc de moduler la tension des anneaux (2) chargés sur le dispositif. Sur la figure [Fig.4], le périmètre du châssis est réduit et les anneaux sont détendus, alors que sur la figure [Fig. 5] le périmètre est plus grand, ce qui permet de maintenir les anneaux tendus. Un système de blocage est prévu pour immobiliser la barre télescopique (7) une fois le réglage de tension effectué.

L'articulation (8) présente au milieu de l'une des barres tubulaires permet de plier avantageusement le châssis (4), afin de charger facilement les anneaux (2) sur le dispositif. Une fois les anneaux (2) mis en place, il suffit de remettre le dispositif dans sa configuration initiale pour rendre au châssis (4) sa forme triangulaire, et ouvrir les anneaux (2). Un mécanisme de blocage est prévu pour maintenir le châssis (4) dans sa configuration nominale.

Dans le mode de réalisation présenté, le dispositif selon l'invention comporte deux organes de largage (5) actifs et un organe de largage (5) passif. Ce choix est un bon compromis entre efficacité du largage à l'unité des anneaux (2) et consommation énergétique des moyens moteurs. La hauteur des organes de largage (5) est adaptée au nombre d'anneaux (2) que l'on souhaite pouvoir embarquer en vol. À titre d'exemple non limitatif, pour une cinquantaine d'anneaux, la hauteur pourra valoir approximativement 25 centimètres. Dans le mode de réalisation présenté, les organes de largage (5) servent avantageusement de pieds pour l'ensemble du dispositif (1) et de l'engin volant (3) sur lequel il est accroché lorsque cet ensemble est posé au sol. Selon un mode particulier de réalisation les organes de largage (5) sont fabriqués en matière plastique pour satisfaire aux contraintes de légèreté.

Un organe de largage actif comporte des éléments mobiles, notamment une courroie dentée sur sa face extérieure (9) et un moyen moteur. La courroie dentée (9) est dimensionnée de manière à ce que l'espace entre deux dents successives (10) ne puisse contenir qu'un unique anneau (2). Elle est maintenue tendue par deux roues situées à ses extrémités. Le moyen moteur permet l'entraînement de la courroie (9) en rotation afin de faire descendre les anneaux (2), pas à pas. Selon le mode de réalisation choisi, le moyen moteur pourra être fixé en haut de l'organe de largage actif (5), ou bien en bas de celui-ci. Selon un mode de réalisation particulier, le moyen moteur choisi sera un moteur électrique de technologie dite « pas-à-pas », c'est-à-dire commandé en position, ceci permettant facilement l'entraînement en rotation de la courroie (9) par pas. Un pas de rotation de la courroie (9) devra être réglé pour être parfaitement égal à la distance entre deux dents (10), afin de pouvoir larguer les anneaux (2) un par un.

Selon le mode de réalisation présenté, trois organes de guidage (6) sont accrochés sur le châssis au niveau des trois organes de largage (5), du côté intérieur de la structure afin de ne pas entraver le largage. Il s'agira de fils souples de manière à pouvoir se replier lorsque le dispositif est posé sur le sol. Ils seront lestés de manière à pendre verticalement sous le dispositif pendant le vol, et à maintenir les anneaux (2) ouverts lors du largage.

Le déclenchement du largage d'un anneau (2) est assuré grâce au module de pilotage du dispositif. Ce module de pilotage est constitué de deux sous-modules : un sous-module émetteur de type télécommande, qui transmet les ordres de largage au sous-module récepteur, déclenchant le largage par la mise en rotation des moyens moteurs. Selon un mode de réalisation particulier, le sous-module émetteur comportera un bouton poussoir et la transmission des informations pourra se faire grâce à des ondes radioélectriques. Des boîtiers fixés sur le châssis pourront être prévus pour accueillir le sous-module récepteur embarqué sur le dispositif lors des vols. Ces boîtiers pourront aussi contenir les dispositifs de commande des moyens moteurs et leurs sources d'énergie. La taille et le nombre de ces boîtiers seront adaptés à leur contenu.

Le système de fixation du dispositif (1) sur l'engin volant (3) n'est pas représenté car il dépend de l'engin volant utilisé, et peut être réalisé de diverses manières.

### Application industrielle

Le dispositif selon l'invention est particulièrement destiné à la pose d'anneaux imprégnés de phéromones à la cime de certaines espèces d'arbres pour lutter contre la prolifération d'insectes ravageurs, en application de la technique dite de « confusion sexuelle ». Par ailleurs le dispositif pourra être utilisé plus largement pour des applications de largage d'éléments souples à profil fermé de type anneaux.

### Liste des documents cités

Les documents cités sont listés ci-dessous :

### Documents brevets

patcit1: Brevet US2017210451(A1) - DRONE -TYPE LIFE SAVING EQUIPMENT DROPPING DEVICE
patcit2: Brevet FR3071481A1 - DISPOSITIF DE LARGAGE D'ELEMENTS SOUPLES A PROFIL FERME, NOTAMMENT DES ANNEAUX CHARGES DE PRODUITS PHYTOSANITAIRES

### Littérature non-brevet

nplcit1: Inconnu : « Lutte par confusion sexuelle contre le carpocapse en verger de noyer », Mai 2016, pages 1-3, France. Extrait de l'Internet : http://senura.com/images/DOCUMENTS/DOCUMENTS_TECHNIQUES/Confusion_se xuelle_verger_Noyer.pdf [extrait le 2020-04-29]

nplcit2: Inconnu : « Châtaignier : lutte biologique contre le carpocapse », 7 Avril 2016, pages 14-25, France. Extrait de l'Internet : http://www.ctifl.fr/DocPdf/Agenda/Presentation/473/4LutteBioCarpoChataigne070416.p df?20/07/2016%20131521 [extrait le 2020-04-29]

## Revendications

1. Dispositif agricole de largage aérien d'éléments souples à profil fermé (2), de type anneaux, comprenant un châssis (4) muni d'au moins deux organes de largage (5) sur sa périphérie extérieure, chaque organe de largage (5) pouvant accueillir facultativement un ou plusieurs éléments mobiles - au moins l'un des organes de largage (5) accueillera un élément mobile -, **caractérisé en ce qu'**au moins un élément mobile est une courroie (9) destinée à maintenir et mettre en mouvement les éléments souples à profil fermé (2) embarqués sur le châssis (4).

2. Dispositif selon la revendication 1 **caractérisé en ce que** le châssis (4) est muni d'exactement trois organes de largage (5), et que deux organes de largage (5) exactement accueillent chacun une courroie (9), le troisième organe de largage (5) ne comportant pas d'élément mobile.

3. Dispositif selon la revendication 1 ou la revendication 2 **caractérisé en ce que** chaque courroie (9) est dentée sur sa face extérieure et dimensionnée de manière à ce que l'espace entre deux dents (10) puisse contenir au moins un élément souple à profil fermé (2).

4. Dispositif selon l'une quelconque des revendications précédentes **caractérisé en ce que** chaque courroie (9) est pourvue d'un moyen moteur commandé à distance.

5. Dispositif selon l'une quelconque des revendications précédentes **caractérisé en ce que** le châssis (4) comporte au moins un mécanisme permettant de régler la distance entre deux organes de largage (5).

6. Dispositif selon la revendication 5 **caractérisé en ce qu'**au moins un des mécanismes permettant de régler la distance entre deux organes de largage (5) est une structure d'une ou plusieurs barres télescopiques (7).

7. Dispositif selon la revendication 5 ou la revendication 6 **caractérisé en ce qu'**au moins un des mécanismes permettant de régler la distance entre deux organes de largage (5) est un ensemble d'une ou plusieurs articulations (8).

8. Dispositif selon l'une quelconque des revendications précédentes **caractérisé en ce qu'**il comporte au moins deux organes de guidage (6) suspendus verticalement sous la structure, maintenant ouverts et horizontaux les éléments souples à profil fermé (2) lors de leur chute.

9. Procédé de largage d'éléments souples à profil fermé (2) mettant en œuvre le dispositif (1) selon l'une quelconque des revendications précédentes :
• Les éléments souples à profil fermé (2) sont chargés sur le dispositif de largage (1) ;
• Le dispositif de largage (1) chargé de ses éléments souples à profil fermé (2) est accroché sous un engin volant (3) ;
• L'engin volant (3) effectue un vol pour se positionner successivement au-dessus des différents emplacements de largage, déterminés au préalable ; au-dessus de chacun de ces emplacements, le largage est déclenché ;
• Lorsque tous les éléments souples à profil fermé (2) initialement chargés sur le dispositif de largage (1) ont été largués, l'engin volant (3) se pose et le dispositif de largage (1) en est décroché.

10. Procédé selon la revendication 9 **caractérisé en ce que** les emplacements de largage sont déterminés automatiquement à l'aide d'un outil de reconnaissance d'image et que le vol de l'engin volant et le déclenchement de chaque largage sont effectués de manière automatique.

## Patentansprüche

1. Landwirtschaftliche Vorrichtung zum Abwerfen von flexiblen Elementen mit geschlossenem Profil (2) aus der Luft, in der Art von Ringen, umfassend einen Rahmen (4), der an seinem Außenumfang mit mindestens zwei Abwurforganen (5) versehen ist, wobei jedes Abwurforgan (5) wahlweise ein oder mehrere bewegliche Elemente aufnehmen kann - mindestens eines der Abwurforgane (5) wird ein bewegliches Element aufnehmen -, **dadurch gekennzeichnet, dass** mindestens ein bewegliches Element ein Riemen (9) ist, der dazu bestimmt ist, die auf dem Rahmen (4) mitgeführten flexiblen Elemente mit geschlossenem Profil (2) zu halten und in Bewegung zu setzen.

2. Vorrichtung nach Anspruch 1, **dadurch gekennzeichnet, dass** der Rahmen (4) mit genau drei Abwurforganen (5) versehen ist, und dass zwei Abwurforgane (5) genau jeweils einen Riemen (9) aufnehmen, wobei das dritte Abwurforgan (5) kein bewegliches Element aufweist.

3. Vorrichtung nach Anspruch 1 oder 2, **dadurch gekennzeichnet, dass** jeder Riemen (9) an seiner Außenseite gezahnt und so dimensioniert ist, dass der Raum zwischen zwei Zähnen (10) mindestens ein flexibles Element mit geschlossenem Profil (2) enthalten kann.

4. Vorrichtung nach einem der vorhergehenden Ansprüche, **dadurch gekennzeichnet, dass** jeder Riemen (9) mit einem ferngesteuerten Antriebsmittel versehen ist.

5. Vorrichtung nach einem der vorhergehenden Ansprüche, **dadurch gekennzeichnet, dass** der Rahmen (4) mindestens einen Mechanismus umfasst, der es ermöglicht, den Abstand zwischen zwei Abwurforganen (5) einzustellen.

6. Vorrichtung nach Anspruch 5, **dadurch gekennzeichnet, dass** mindestens einer der Mechanismen, die es ermöglichen, den Abstand zwischen zwei Abwurforganen (5) einzustellen, eine Struktur aus einer oder mehreren Teleskopstangen (7) ist.

7. Vorrichtung nach Anspruch 5 oder Anspruch 6, **dadurch gekennzeichnet, dass** mindestens einer der Mechanismen, der es ermöglicht, den Abstand zwischen zwei Abwurforganen (5) einzustellen, eine Einheit aus einem oder mehreren Gelenken (8) ist.

8. Vorrichtung nach einem der vorhergehenden Ansprüche, **dadurch gekennzeichnet, dass** sie mindestens zwei Führungsorgane (6) umfasst, die vertikal unter der Struktur aufgehängt sind und die flexiblen Elemente mit geschlossenem Profil (2) während ihres Falls offen und horizontal halten.

9. Verfahren zum Abwurf von flexiblen Elementen mit geschlossenem Profil (2), bei dem die Vorrichtung (1) nach einem der vorhergehenden Ansprüche eingesetzt wird:
• Die flexiblen Elemente mit geschlossenem Profil (2) werden auf die Abwurfvorrichtung (1) geladen;
• Die mit ihren flexiblen Elementen mit geschlossenem Profil (2) beladene Abwurfvorrichtung (1) wird unter einem Fluggerät (3) eingehängt;
• Das Fluggerät (3) führt einen Flug durch, um sich nacheinander über den verschiedenen, zuvor bestimmten Abwurfstellen zu positionieren; über jeder dieser Stellen wird der Abwurf ausgelöst;
• Wenn alle ursprünglich auf der Abwurfvorrichtung (1) geladenen flexiblen Elemente mit geschlossenem Profil (2) abgeworfen worden sind, landet das Fluggerät (3) und die Abwurfvorrichtung (1) wird aus ihm ausgehängt.

10. Verfahren nach Anspruch 9, **dadurch gekennzeichnet, dass** die Abwurfstellen automatisch mithilfe eines Bilderkennungstools bestimmt werden und dass der Flug des Fluggeräts und die Auslösung jedes Abwurfs automatisch erfolgen.

## Claims

1. An agricultural device for air dropping flexible elements with closed profile (2), of the ring type, comprising a frame (4) equipped with at least two dropping members (5) on the outside periphery thereof, each dropping member (5) being able to optionally receive one or a plurality of mobile elements - at least one of the dropping members (5) will receive a mobile element - **characterized in that** at least one mobile element is a belt (9) intended to maintain and move the flexible elements with closed profile (2) on-board the frame (4).

2. The device according to claim 1 **characterized in that** the frame (4) is exactly equipped with three dropping members (5) and that two of the dropping members (5) each exactly receive a belt (9), the third dropping member (5) not having any mobile element.

3. The device according to claim 1 or claim 2 **characterized in that** each belt (9) has teeth on the outside face thereof sized so that the space between two teeth (10) can contain at least one flexible element with closed profile (2).

4. The device according to any of the preceding claims **characterized in that** each belt (9) is equipped with a remote controlled motor means.

5. The device according to any of the preceding claims **characterized in that** the frame (4) has at least one mechanism allowing the distance between two dropping members (5) to be adjusted.

6. The device according to claim 5 **characterized in that** at least one of the mechanisms allowing the distance between two dropping members (5) to be adjusted is a structure of one or a plurality of telescopic bars (7).

7. The device according to the claim 5 or claim 6 **characterized in that** at least one of the mechanisms allowing the distance between two dropping members (5) to be adjusted is an assembly of one or a plurality of joints (8).

8. The device according to any of the preceding claims **characterized in that** it has at least two guiding members (6) suspended vertically under the structure, keeping the flexible elements with closed profile (2) open and horizontal during the fall thereof.

9. A method for dropping flexible elements with closed profile (2) implementing the device (1) according to any of the preceding claims:
• The flexible elements with closed profile (2) are loaded onto the dropping device (1);
• The dropping device (1) loaded with the flexible elements with closed profile (2) thereof is attached under a flying machine (3);
• The flying machine (3) flies to position itself above each of the different and predetermined dropping locations successively; the dropping is triggered above each of said locations;
• When all the flexible elements with a closed profile (2) initially loaded onto the dropping device (1) have been dropped, the flying machine (3) lands and the empty dropping device (1) is unhooked therefrom.

10. The method according to claim 9 **characterized in that** the dropping locations are determined automatically using an image recognition tool and that the flight of the flying machine and the triggering of each drop are carried out automatically.
